# EUROPÄISCHE PATENTSCHRIFT

(11) **EP 3 318 393 B1**
(45) Veröffentlichungstag und Bekanntmachung des Hinweises auf die Patenterteilung: **21.06.2023**
(21) Anmeldenummer: 17197346.4
(22) Anmeldetag: 19.10.2017
(51) Int. Cl.: B29C 70/54

(54) **HARZLEITUNG MIT UMFANGSEITIGEN ÖFFNUNGEN**
RESIN LINE WITH PERIPHERAL OPENINGS
CONDUIT DE RÉSINE POURVU D'OUVERTURES CÔTÉ PÉRIPHÉRIE

(30) Priorität: 07.11.2016 DE 102016121245
(43) Veröffentlichungstag der Anmeldung: 09.05.2018
(73) Patentinhaber: TWIM Holding GmbH, 49477 Ibbenbüren (DE)
(72) Erfinder: Dierkes, Dominik, 49477 Ibbenbüren (DE)
(74) Vertreter: Busse & Busse

(56) Entgegenhaltungen:
- EP-A1- 2 340 927
- AT-U1- 12 542
- DE-A1- 2 544 190
- DE-A1- 2 915 691
- DE-A1-102014 011 787
- JP-B2- 4 104 422
- JP-B2- 4 380 974
- US-A- 4 942 013
- US-A- 5 050 343
- US-A1- 2006 068 170

## Beschreibung

Die vorliegende Erfindung bezieht sich auch auf ein Verfahren zur Herstellung eines Faserverbundbauteils, bei dem eine Harzleitung in ein Werkzeug eingelegt wird, um in das Werkzeug eingelegten Verstärkungsfasern unter einem Vakuum ein flüssiges Matrixmaterial zuzuführen, mit dem die Verstärkungsfasern getränkt werden und wobei das Matrixmaterial dabei auch die Werkzeugform ausfüllt und das Matrixmaterial nach der vollständigen Durchtränkung der Verstärkungsfasern und der Befüllung der Formkammer im Werkzeug aushärtet.

Eine Harzleitung ist aus der Schrift DE 10 2014 011 787 A1 bekannt. Als Harzleitung ist in dieser Schrift ein flexibler Spiralschlauch offenbart. Die Harzleitung wird zur Herstellung eines Faserverbundbauteils in ein Werkzeug eingelegt, um in das Werkzeug eingelegten Verstärkungsfasern unter einem Vakuum ein flüssiges Matrixmaterial zuzuführen. Die Verstärkungsfasern können als Faserhalbzeuge als Rovings, Matten, Gelege, Gewebe, Multiaxialmaterialien, Gewirke und Geflechte vorliegen und aus den unterschiedlichsten Fasermaterialien hergestellt sein, wie beispielsweise Kohlenstofffasern, Glasfasern, Aramidfasern, Borfasern oder Hybridwerkstoffen, auch in beliebiger Kombination. Die Verstärkungsfasern werden mit dem über die Harzleitung zugeführten Matrixmaterial getränkt. Das Matrixmaterial füllt dabei auch die Werkzeugform aus. Als Matrixwerkstoffe können verschiedene geeignete Harzsysteme eingesetzt werden, die eine geeignete Viskosität im Arbeitstemperaturbereich aufweisen und sich gut mit den Verstärkungsfasern verbinden. Das Matrixmaterial härtet nach der vollständigen Durchtränkung der Verstärkungsfasern und Befüllung der Formkammer im Werkzeug aus. Danach kann das fertige Bauteil aus dem Werkzeug entnommen werden. Das Vakuum-Infusionsverfahren ist beispielhaft in der Schrift DE 102 39 325 B4 und JP4380974 B2 beschrieben.

Die aus dem Stand der Technik bekannten flexiblen Spiralschläuche sind relativ teuer in der Herstellung. Sie müssen relativ dickwandig sein, um nicht unter der Einwirkung des Vakuums zu kollabieren. Je nach Biegeradien, in denen die Spiralschläuche verlegt sind, öffnen sich die Spiralen unterschiedlich stark, so dass die Abgabe des Matrixmaterials nicht über die Länge der Harzleitung überall gleich ist. Um ihre Durchlässigkeit an unterschiedliche Anforderungen anzupassen, müssen jeweils unterschiedliche Schläuche verwendet werden, für deren Herstellung jeweils unterschiedliche Werkzeuge erforderlich sind. Eine variable Anpassung an unterschiedliche Durchlässigkeitsanforderungen ist deshalb nur mit unterschiedlich bevorrateten Schlauchtypen möglich.

Wellrohre sind aus verschiedenen Anwendungen bekannt, wie beispielsweise aus den Schriften AT 12 542 U1, DE 25 44 190 A1 oder DE 29 15 691 A1. Wellrohre sind bisher aber nicht als matrixmaterialleitende Harzleitungen eingesetzt worden, da diese für diesen Anwendungszweck wegen ihrer Wellrohrstruktur ungeeignet erschienen.

Es ist die Aufgabe der vorliegenden Erfindung, ein Verfahren zur Herstellung eines Faserverbundbauteils zu verbessern..

Die Aufgabe wir für eine gattungsgemäße Harzleitung gelöst, indem als Harzleitung ein Wellrohr verwendet ist, dessen Wandung Durchtrittsöffnungen aufweist.

Bei dem vorgeschlagenen Wellrohr handelt es sich um ein Rohr aus einem steifen Material, das durch die Wellenform flexibel verlegbar ist. Das Wellrohr ist bevorzugt aus einem thermoplastischen Kunststoffmaterial hergestellt, wie beispielsweise einem Polyamid, Polyethylen, Polyvinylchlorid, Polytetrafluorethylen oder einem Polypropylen. Das verwendete Kunststoffmaterial muss im Arbeitstemperaturbereich des Matrixmaterials noch eine ausreichende Festigkeit aufweisen, um nicht unter dem Vakuum im Werkzeug zu kollabieren und/oder durch die Wärme aus dem Matrixmaterial oder darin enthaltene Lösungsmittel so aufzuweichen oder sich zu verflüssigen, dass das Matrixmaterial nicht mehr zuverlässig im Werkzeug verteilt oder das Matrixmaterial durch das Material des Wellrohres verunreinigt wird.

Die Wandung des Wellrohrs weist einen über seine Länge wellenförmig wechselnden Durchmesser auf. Je nach verwendetem Material kann die Wandstärke des Materials gegenüber den Spiralschläuchen auf eine Dicke von 0,2 bis 0,4 mm reduziert werden. Die Wellen des Wellrohres können parallel ringförmig ausgebildet sein, oder die Wellen verlaufen spiralförmig, wodurch das Fließverhalten des Matrixmaterials verbessert werden kann. Durch die Wellenform der Wandung treten beim Durchfluss tendenziell Verwirbelungen im Matrixmaterial auf, durch die sich die Durchflussgeschwindigkeit verringert. Bei den niedrigen Fließgeschwindigkeiten des Matrixmaterials sind diese Effekte allerdings vernachlässigbar. Vorteilhaft ist allerdings die homogenere Temperaturverteilung des Matrixmaterials über den Querschnitt der Harzleitung, insbesondere beim Start der Infusion, die sich in Folge der Verwirbelungen einstellt.

Die Wellen des Wellrohres schaffen eine gegenüber einer glatten Wandfläche erhöhte Steifigkeit und Tragfähigkeit in radialer Richtung des Wellrohres. In Längsrichtung kann das Wellrohr wegen der Wellenform der Wandung aber auch leicht in Biegeradien verformt werden, die das Wellrohr annehmen muss, um in ein vorgegebenes Werkzeug eingelegt werden zu können. Dadurch ist ein Wellrohr ein ideales Material, um die Steifigkeitsanforderungen unter Einwirkung des Vakuums, aber auch die Flexibilitätsanforderungen an die einfache Verlegbarkeit einer Harzleitung in einem Werkzeug erfüllen zu können.

Das Wellrohrmaterial kann als extrudiertes Endlosmaterial auf Spindeln aufgerollt einfach gelagert und transportiert werden. Das für einen Herstellvorgang benötigte Wellrohrmaterial kann von Endlosstrang in einer beliebigen Länge abgeschnitten werden. Schnittabfall wird dadurch auf ein Minimum reduziert.

Das Wellrohr weist Durchtrittsöffnungen auf, durch die das Matrixmaterial aus dem Inneren des Wellrohres nach außen treten kann. Die Durchtrittsöffnungen sind so dimensioniert und ausgeformt, dass je nach Viskosität und Fließverhalten des verwendeten Matrixmaterials und dem gewünschten Verlauf der Fließfronten innerhalb des Werkzeugs während der Tränkungsphase eine genau passende Menge des Matrixmaterials an einer jeweils gewünschten Stelle austritt. Die Durchtrittsöffnungen können im Wellental oder auf der Wellenspitze ausgebildet sein oder sich über die Länge einer oder mehrerer Wellen erstrecken.

Nach einer Ausgestaltung der Erfindung ist die Harzleitung mit einer Fließhilfe und/oder mit einem Vlies ummantelt. Eine Fließhilfe besteht aus einem netzartigen Gewebe, das es dem Matrixmaterial ermöglicht, auch unter dem Vakuumdruck einer darüber liegenden Folie zu fließen. Die Fließhilfe ist auch vorteilhaft, um das aus dem Wellrohr austretende Matrixmaterial möglichst gleichmäßig zu verteilen. Da das Werkzeug beim Infusionsverfahren mit einer matrixmaterial- oder gasundurchlässigen Folie abgedeckt sein kann, ist es möglich, dass ohne eine Lage einer Fließhilfe die Durchtrittsöffnung von der Folie verschlossen ist, insbesondere wenn das Vakuum anliegt, so dass dann kein Matrixmaterial durch diese Durchtrittsöffnung austreten kann. Die Fließhilfe verhindert, dass die Durchtrittsöffnung durch eine Folie verschlossen werden kann. Das Vlies dient insbesondere dem Zweck, Gasblasen zurückzuhalten, die sich im Matrixmaterial befinden. Wenn das Matrixmaterial beginnt, durch das Vlies zu sickern, platzen vom ersten Schaum die Gasblasen auf, und das Gas kann abgesaugt werden. Wenn die Harzleitung mit flüssigem Matrixmaterial durchsetzt ist, haften die Gasblasen aufgrund ihrer Oberflächenspannung an den Vliesfasern an und treten nicht durch das Vlies hindurch. Das Vlies hält auf diese Weise die Gasblasen im Matrixmaterial zurück. Durch eine geringere Zahl von Gasblasen im fertigen Faserverbundbauteil steigt dessen Qualität. Für die Erfindung spielt es keine Rolle, ob die Fließhilfe oder das Vlies außen aufliegen, wenn das Wellrohr mit beiden Mitteln ummantelt ist.

Nach einer Ausgestaltung der Erfindung variiert die Form, Größe und/oder Häufigkeit der Durchtrittsöffnungen über die Länge eines Wellrohrabschnitts. Die Durchtrittsöffnungen müssen über die Länge des Wellrohres nicht gleichmäßig ausgebildet sein, es ist auch möglich, die Form, Größe und/oder Häufigkeit der Durchtrittsöffnungen über die Länge eines Wellrohrabschnitts zu variieren, um dadurch gezielt das Fließverhalten des Matrixmaterials in einem Werkzeug zu beeinflussen. Dazu können mit einer Maschine Durchtrittsöffnungen in unterschiedlicher Form, Größe und/oder Häufigkeit in die Wandung des Wellrohres eingestanzt, gelasert, geschmolzen, geschnitten oder auf sonstige Weise in die Wandung eingebracht werden. Dadurch ist es möglich, in einem Zeitintervall bereichsweise mehr Matrixmaterial in einen Werkzeugabschnitt einfließen zu lassen als in einem anderen Werkzeugabschnitt, was beispielsweise bei Faserverbundbauteilen mit unterschiedlich ausgeprägter Materialdicke vorteilhaft sein kann, um ein gleichmäßiges Vorrücken einer Fließfront im Werkzeug zu ermöglichen.

Nach einer Ausgestaltung der Erfindung ist die Harzleitung aus mehreren Wellrohrabschnitten zusammengesetzt, die durch ein Kupplungsstück miteinander verbunden sind. Es ist insbesondere möglich, Wellrohrabschnitte mit einer unterschiedlichen Form, Größe und/oder Häufigkeit von Durchtrittsöffnungen mit Kupplungsstücken aneinanderzusetzen, um dadurch einen Wellrohrstrang zu erhalten, der über seine Länge hinweg an bestimmten Abschnitten mehr oder weniger Harzmaterial austreten lässt. Dazu müsste ein Verarbeiter mit unterschiedlichen Durchtrittsöffnungen versehene Wellrohre vorhalten, um diese wahlweise in Abschnitten miteinander zu einer Harzleitung zu verbinden. Alternativ ist es möglich, dass ein Verarbeiter eine Lochungsmaschine vorhält, mit der er einen Wellrohrtyp nach aktuellem Bedarf mit Durchtrittsöffnungen mit einer unterschiedlichen Form, Größe und/oder Häufigkeit versieht. Ein Verarbeiter kann sich dann Wellrohrabschnitte so herstellen, wie er sie aktuell benötigt.

Nach einer Ausgestaltung der Erfindung sind Wellrohrabschnitte mit einem unterschiedlichen Durchmesser durch Kupplungsstücke miteinander zu einer Harzleitung verbunden. Durch unterschiedliche Durchmesser können unterschiedliche Druckverhältnisse in den entsprechenden Abschnitten der Harzleitung eingestellt werden. Wenn eine Harzleitung beispielsweise aus mehreren Abschnitten zusammengesetzt ist, deren Durchmesser sich verringert, je weiter der Abschnitt von der Stelle entfernt ist, in der das Matrixmaterial in die Harzleitung eingeleitet wird, kann dadurch beispielsweise der Druckabfall zumindest teilweise kompensiert werden, der sich bei einem gleich bleibenden Durchmesser der Harzleitung über deren Länge einstellt. Es ist auch möglich, eine dickere Harzleitung im Bereich einer Kupplung in zwei dünnere Harzleitungsstränge zu teilen, wodurch das Matrixmaterial ohne einen Druckverlust in der Harzleitung dem Werkzeug über eine größere Fläche zugeführt werden kann. Über die Beeinflussung des Druckes in der Harzleitung kann auch die Geschwindigkeit beeinflusst werden, mit der die Matrixflüssigkeit aus diesem Abschnitt einer Harzleitung austritt. Die Verwendung von Wellrohrabschnitten mit einem unterschiedlichen Durchmesser kann also auch dazu beitragen, das Matrixmaterial gleichmäßiger und gezielter mit einer gezielt beeinflussten Fließfront in einem Werkzeug zu verteilen.

Es wird ausdrücklich darauf hingewiesen, dass die vorstehend beschriebenen Ausgestaltungen der Erfindungen jeweils für sich, aber auch in einer beliebigen Kombination miteinander mit dem Gegenstand des Anspruchs 1 kombiniert werden können.

Weitere vorteilhafte Abwandlungen und Ausgestaltung der Erfindung lassen sich der nachfolgenden gegenständlichen Beschreibung und den Zeichnungen entnehmen.

Die Erfindung soll anhand eines Ausführungsbeispiels näher beschrieben werden. Es zeigen:
- Fig. 1:: eine Ansicht auf ein Wellrohr,
- Fig. 2:: eine Ansicht auf ein Wellrohr mit einer Fließhilfe, und
- Fig. 3:: eine Ansicht auf ein Wellrohr mit einem zusätzlichen Vlies.

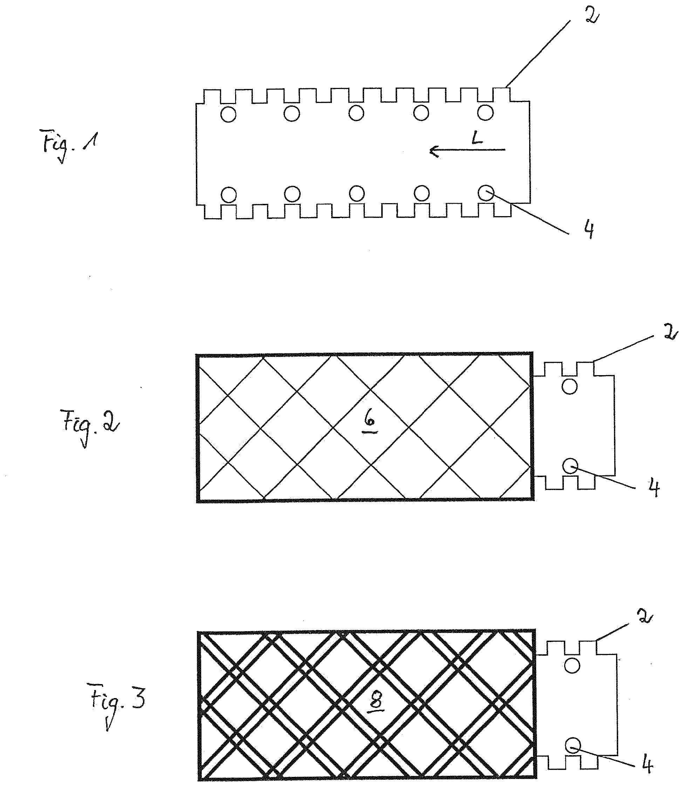

In Fig. 1 ist schematisch der Umriss eines Wellrohres 2 gezeigt. Ebenfalls schematisch sind Durchtrittsöffnungen 4 angedeutet, die sich in der Wandung des Wellrohres 2 befinden. Im gezeichneten Ausführungsbeispiel besteht das Wellrohr 2 aus einer Abfolge von parallelen ringförmigen Ausformungen. Im Ausführungsbeispiel sind die Ringe mit einer eckigen Querschnittskontur gezeigt, die Ringe können allerdings auch eine gerundete Querschnittsform aufweisen, wie beispielsweise halbkreisförmig oder mit einer halbovalen Form.

Wenn ein Matrixmaterial in Längsrichtung L durch das Wellrohr 2 fließt, kann das Matrixmaterial durch die Durchtrittsöffnungen 4 nach außen treten. Wenn das Wellrohr 2 in ein Werkzeug zur Herstellung eines Faserverbundbauteils eingelegt ist, kann das Matrixmaterial nach dem Verlassen des Wellrohres durch die Durchtrittsöffnungen 4 in die im Werkzeug ausgelegten Verstärkungsfasern einsickern und die Werkzeugform ausfüllen.

In Fig. 2 ist eine Ansicht auf ein Wellrohr gezeigt, das zumindest teilweise mit einer Fließhilfe 6 ummantelt ist. Wenn das Matrixmaterial aus dem Innenraum des Wellrohres 2 durch die Durchtrittsöffnungen 4 nach außen tritt, zieht das Matrixmaterial in die Faserlage der Fließhilfe 6 ein, verteilt sich darin und kann von dort aus vom Vakuum gezogen weiter in das Werkzeug eindringen. Über die Fläche der Fließhilfe 6 verteilt sich das Matrixmaterial besser im Werkzeug.

In Fig. 3 ist eine Ansicht auf ein Wellrohr 2 gezeigt, bei dem das Wellrohr 2 mit einem zusätzlichen Vlies ummantelt ist. Das Vlies dient dem Zweck, Gasblasen aufzulösen und zurückzuhalten, die sich in dem Matrixmaterial befinden, das durch die Durchtrittsöffnungen 4 aus dem Wellrohr 2 austritt.

Das erfindungsgemäße Wellrohr kann insbesondere am Rand von Werkzeugen verlegt werden, wo es keine Rolle spielt, dass sich die Außenkontur des Wellrohres als Abdruck im aushärtenden Matrixmaterial verbleibt. Da in solchen Werkzeugen die Randstücke des Faserverbundbauteils häufig abgetrennt und entsorgt werden, sind die Abdrücke des Wellrohres im Matrixmaterial des fertigen Faserverbundbauteils nicht sichtbar. Bei einer solchen Anwendung überwiegen die Vorteile der leichten Handhabbarkeit der Harzleitung, wenn sie aus einem Wellrohr besteht, sowie die günstigen Beschaffungskosten einer solchen Harzleitung. Von Bedeutung bei dem Einsatz des Wellrohres als Harzleitung spielt auch eine Rolle, dass die Zuführung des Matrixmaterials in das Werkzeug punktuell besser kontrollierbar ist, indem Wellrohre mit entsprechend ausgebildeten Durchtrittsöffnungen verwendet werden.

Das vorstehend beschriebene Ausführungsbeispiel dient nur der Erläuterung der Erfindung. Die Erfindung ist nicht auf das vorstehend beschriebene Ausführungsbeispiel beschränkt. Dem Fachmann bereitet es keine Schwierigkeiten, das Ausführungsbeispiel auf eine ihm als geeignet erscheinende Weise zu verändern, um es an einen konkreten Anwendungsfall anzupassen.

## Patentansprüche

1. Verfahren zur Herstellung eines Faserverbundbauteils, bei dem eine Harzleitung in ein Werkzeug eingelegt wird, um in das Werkzeug eingelegten Verstärkungsfasern unter einem Vakuum ein flüssiges Matrixmaterial zuzuführen, mit dem die Verstärkungsfasern getränkt werden und wobei das Matrixmaterial dabei auch die Werkzeugform ausfüllt und das Matrixmaterial nach der vollständigen Durchtränkung der Verstärkungsfasern und der Befüllung der Formkammer im Werkzeug aushärtet, **dadurch gekennzeichnet, dass** als Harzleitung ein Wellrohr (2) verwendet ist, dessen Wandung Durchtrittsöffnungen (4) aufweist.

2. Verfahren nach Anspruch 1, **dadurch gekennzeichnet, dass** die Harzleitung mit einer Fließhilfe und/oder mit einem Vlies ummantelt ist.

3. Verfahren nach Anspruch 1 oder 2, **dadurch gekennzeichnet, dass** die Form, Größe und/oder Häufigkeit der Durchtrittsöffnungen (4) über die Länge eines Wellrohrabschnitts variiert.

4. Verfahren nach einem der vorhergehenden Ansprüche, **dadurch gekennzeichnet, dass** die Harzleitung aus mehreren Wellrohrabschnitten zusammengesetzt ist, die durch ein Kupplungsstück miteinander verbunden sind.

5. Verfahren nach einem der vorhergehenden Ansprüche, **dadurch gekennzeichnet, dass** Wellrohrabschnitte mit einem unterschiedlichen Durchmesser durch Kupplungsstücke miteinander zu einer Harzleitung verbunden sind.

## Claims

1. Method for producing a fiber composite component, in which a resin line is inserted into a tool in order to supply a liquid matrix material under a vacuum to reinforcing fibers inserted into the tool, with which material the reinforcing fibers are impregnated, the matrix material also filling the tool mold and the matrix material curing after the complete impregnation of the reinforcing fibers and the filling of the mold chamber in the tool, **characterized in that** a corrugated pipe (2), the wall of which has through-openings (4), is used as the resin line.

2. Method according to claim 1, **characterized in that** the resin line is coated with a flow aid and/or with a nonwoven fabric.

3. Method according to either claim 1 or claim 2, **characterized in that** the shape, size and/or frequency of the through-openings (4) varies over the length of a corrugated pipe portion.

4. Method according to any of the preceding claims, **characterized in that** the resin line is composed of a plurality of corrugated pipe portions which are connected to each other by a coupling piece.

5. Method according to any of the preceding claims, **characterized in that** corrugated pipe portions that have a different diameter are connected to one another by coupling pieces to form a resin line.

## Revendications

1. Procédé de fabrication d'un élément composite renforcé en fibres, dans lequel une conduite de résine est insérée dans un outil pour acheminer sous vide un matériau de matrice liquide à des fibres de renforcement insérées dans l'outil, avec lequel matériau les fibres de renforcement sont imprégnées, et dans lequel le matériau de matrice remplit également le moule d'outil et le matériau de matrice durcit après l'imprégnation complète des fibres de renforcement et le remplissage de la chambre de moule dans l'outil, **caractérisé en ce qu'**un tube ondulé (2) est utilisé comme conduite de résine, dont la paroi présente des ouvertures de passage (4).

2. Procédé selon la revendication 1, **caractérisé en ce que** la conduite de résine est enveloppée d'un auxiliaire d'écoulement et/ou d'un non-tissé.

3. Procédé selon la revendication 1 ou 2, **caractérisé en ce que** la forme, la taille et/ou la fréquence des ouvertures de passage (4) varient sur la longueur d'une section de tube ondulé.

4. Procédé selon l'une quelconque des revendications précédentes, **caractérisé en ce que** la conduite de résine est composée de plusieurs sections de tube ondulé reliées entre elles par une pièce de couplage.

5. Procédé selon l'une quelconque des revendications précédentes, **caractérisé en ce que** des sections de tube ondulé comportant des diamètres différents sont reliées entre elles par des pièces de couplage pour former une conduite de résine.
